# EUROPÄISCHE PATENTSCHRIFT

(11) **EP 3 230 183 B1**
(45) Veröffentlichungstag und Bekanntmachung des Hinweises auf die Patenterteilung: **17.02.2021**
(21) Anmeldenummer: 15787533.7
(22) Anmeldetag: 26.10.2015
(51) Int. Cl.: B65G 45/10, B65G 54/02

(54) **ELEKTROMAGNETBETRIEBENE FÖRDERVORRICHTUNG**
SOLENOID-POWERED CONVEYING DEVICE
DISPOSITIF DE TRANSPORT ACTIONNÉ PAR ÉLECTROAIMANTS

(30) Priorität: 09.12.2014 DE 102014225317
(43) Veröffentlichungstag der Anmeldung: 18.10.2017
(73) Patentinhaber: Robert Bosch GmbH, 70442 Stuttgart (DE)
(72) Erfinder: PAWELETZ, Anton, 70736 Fellbach (DE); FRANGEN, Joachim, 74081 Heilbronn (DE); RAATZ, Heike, 70372 Stuttgart (DE)
(86) Internationale Anmeldenummer: PCT/EP2015/074705
(87) Internationale Veröffentlichungsnummer: WO 2016/091444

(56) Entgegenhaltungen:
- WO-A1-2009/083889
- WO-A2-2013/112761
- DE-U1- 29 620 915
- JP-A- H06 135 324
- JP-A- H10 323 010
- JP-A- 2002 066 867
- JP-A- 2003 088 086
- JP-A- 2004 336 963
- US-A- 5 093 590
- US-A- 5 179 304
- US-A1- 2004 007 920

## Beschreibung

Die vorliegende Erfindung betrifft eine elektromagnetbetriebene Fördervorrichtung, die zur Gewährleistung eines störungsfreien Betriebs eine Reinigungsvorrichtung umfasst. Die vorliegende Erfindung betrifft ferner ein Verfahren zum Reinigen von Dauermagneten einer solchen Fördervorrichtung.

Magnetbetriebene oder durch Magneten angetriebene Fördervorrichtungen sind aus dem Stand der Technik in vielfältigsten Ausgestaltungsformen bekannt. So beschreibt beispielsweise DE 1958177 A1 eine Fördervorrichtung mit einem umlaufenden, endlosen magnetisierbaren Förderband und einer an dessen Innenseite angreifenden, mit Permanentmagneten versehenen endlosen Mitnehmerkette, die von einer Antriebsvorrichtung angetrieben wird. Auf der Oberseite des Förderbandes können Materialien auf geeigneten, magnetischen, also ebenfalls mit Dauermagneten versehenen, Förderelementen befördert werden. Problematisch für alle magnetbetriebenen Fördervorrichtungen ist eine Verschmutzung der Dauermagnete. Dies führt vor allem zu lokalen Veränderungen des Magnetfeldes. Je nach Verschmutzungsgrad kann es zudem zu mechanischen Störungen des Förderablaufs und der Fördergeschwindigkeit kommen.

US 5,179,304 A beschreibt ein Linearmotosystem mit einem Basiselement, an dem ein Stator befestigt ist, der Vertiefungen aufweist, die mit einem nichtmagnetischen Material verfüllt sind. Ein bewegliches Element ist auf dem Stator angeordnet, das Magnetpole aufweist, die in Bewegungsrichtung auf dem beweglichen Element angeordnet sind. Eine Transportfläche ist an dem beweglichen Element vorgesehen. An einem Ende des beweglichen Elements ist ein Schmutzpartikel entfernendes Element angeordnet, mit dem Partikel von dem Stator entfernt werden können.

JP 2002-066867A offenbart eine elektromagnetbetriebene Fördervorrichtung nach dem Oberbegriff des Anspruchs 1 und ein Verfahren zum Reinigen von Dauermagneten einer elektromagnetbetriebenen Fördervorrichtung nach dem Oberbegriff des Anspruchs 16. Das genannte Dokument beschreibt eine Vorrichtung, die ein bewegliches Element umfasst, das durch eine Führungseinrichtung geführt wird. Ferner umfasst die Vorrichtung einen Stator, der an dem beweglichen Element angeordnet ist. Eine Magnetplatte ist so dem Stator gegenüberliegend angeordnet, dass zwischen der Magnetplatte und dem Stator ein Spalt besteht. Ein reversibel entfernbarer Beschichtungsfilm ist an den sich gegenüberliegenden Enden der Magnetplatte befestigt, der zum Ablösen von Partikeln geeignet ist. Offenbarung der Erfindung

Die erfindungsgemäße elektromagnetbetriebene Fördervorrichtung gemäß Anspruch 1 zeichnet sich durch einen stabilen Förderablauf mit stets gleichbleibender Fördergeschwindigkeit aus. Die erfindungsgemäße Fördervorrichtung weist hierzu eine Reinigungsvorrichtung auf, mittels der während des Betriebs der Fördervorrichtung Partikel von einer Oberfläche von

Dauermagneten (Permanentmagnete), die zur Fortbewegung von Förderelementen (Movern) der Fördervorrichtung an den Förderelementen angeordneten sind, entfernt werden können. Es ist gemäß der vorliegenden Erfindung möglich, Verunreinigungen ohne Unterbrechung des Fördervorganges zu beseitigen. Diese In-Prozess-Reinigung spart Kosten und vermeidet Produktionsausfälle. Die Reinigungsvorrichtung ist hierzu, wie die bewegbaren Förderelemente, integraler Bestandteil der Fördervorrichtung.

Der Vollständigkeit halber sei ausgeführt, dass die erfindungsgemäße Fördervorrichtung auch mehrere Förderelemente mit je einem oder mehreren Dauermagneten aufweisen kann.

Die Unteransprüche zeigen bevorzugte Weiterbildungen der Erfindung.

Eine vorteilhafte Weiterbildung der erfindungsgemäßen Fördervorrichtung sieht vor, dass die Reinigungsvorrichtung ortsfest ist und der Dauermagnet während der Fortbewegung des Förderelements an der Reinigungsvorrichtung vorbeiführbar ist. Hierdurch wird ermöglicht, dass der Dauermagnet während jedes Umlaufs des Förderelements einmal gereinigt wird. Dies trägt zu einem störungs- und ausfallfreien Förderablauf bei.

Die Reinigungswirkung kann durch unterschiedliche Effekte erzielt werden. Eine vorteilhafte Ausgestaltung sieht dabei vor, dass die Reinigungsvorrichtung eine magnetische Reinigungsvorrichtung ist und das Entfernen der Partikel von der Oberfläche des Dauermagneten unter Verwendung von Magnetkraft erfolgt. Die magnetische Reinigungsvorrichtung eignet sich demnach insbesondere für eine Beseitigung von magnetischen Partikeln.

Gemäß einer vorteilhaften Weiterbildung umfasst die Reinigungsvorrichtung ein bewegliches, magnetisches Element zum Ablösen der Partikel. Ein solches magnetisches Element kann jegliche geeignete Form aufweisen und beispielhaft als Platte oder rotationssymmetrisches Element ausgebildet sein. Durch Bewegung des magnetischen Elements in Richtung des zu reinigenden Dauermagneten, werden, induziert durch die magnetische Anziehungskraft des magnetischen Elements, Partikel von der Oberfläche des Dauermagneten angezogen, von den Dauermagneten abgelöst und an das magnetische Element gebunden. Durch Bewegung des magnetischen Elements fort vom gereinigten Dauermagneten, können die partikulären Verunreinigungen dauerhaft entfernt werden.

Vorteilhaft umfasst die magnetische Reinigungsvorrichtung eine erste rotierbare Rolle, wobei die erste rotierbare Rolle mit einer Magnetfeldstärke magnetisierbar ist, die stärker ist als eine Magnetfeldstärke des Dauermagneten des Förderelements. Durch die Erzeugung eines entsprechenden Magnetfeldes an der Oberfläche der ersten Rolle, werden zu entfernende Partikel von der Oberfläche des Dauermagneten ohne mechanische Einwirkung auf die erste Rolle übertragen. Durch Rotation der ersten Rolle wird noch unverschmutzte Oberfläche den Dauermagneten zugewandt, so dass die Reinigungsleistung sehr effektiv ist. Die Reinigung erfolgt dabei sehr schonend und beeinträchtigt die Oberflächenbeschaffenheit des Dauermagneten selbst bei häufigem Reinigen nicht.

Zur Regeneration der Reinigungsleistung der ersten Rolle kann das an die erste Rolle angelegte Magnetfeld abgeschaltet werden. Zunächst durch magnetische Wechselwirkung an der ersten Rolle anhaftende Partikel werden somit nicht mehr von der ersten Rolle angezogen und fallen von ihr ab. Besonders geeignet ist hierbei eine intervallartige Abschaltung des Magnetfeldes der ersten Rolle, insbesondere auch unter Rotation der Rolle, so dass die gesamte Oberfläche der ersten Rolle von anhaftenden Partikeln befreit wird.

Eine Steuerung der Reinigungsvorrichtung kann vorteilhaft dadurch verbessert werden, dass neben der ersten rotierbaren Rolle eine zweite rotierbare Rolle und ein die erste Rolle und die zweite Rolle umschließendes, umlaufendes Band vorgesehen sind. Durch Anlegen eines Magnetfeldes an die erste Rolle werden Partikel von der Oberfläche der Dauermagneten auf das die erste Rolle umgebende Band befördert. Durch Verbindung der ersten Rolle mit einer zweiten Rolle über das Band können die Partikel sehr schnell und effizient von der ersten Rolle abgeleitet werden, so dass diese zum Ablösen weiterer Partikel befähigt wird.

Vorteilhafterweise ist die zweite Rolle nicht magnetisierbar. Auf dem Band gehaltene Partikel fallen dann außerhalb des Einflussbereichs des Magnetfeldes der ersten Rolle ungehindert vom Band ab. Das Band ist damit quasi selbstreinigend. Eine aufwendige Steuerung der Magnetisierung der ersten Rolle oder der Rotation der ersten Rolle ist damit nicht notwendig.

Alternativ zu einer magnetischen Reinigungsvorrichtung ist eine eine Haftkraft aufweisende Reinigungsvorrichtung möglich. Die eine Haftkraft aufweisende Reinigungsvorrichtung entfernt Partikel von der Oberfläche des Dauermagneten durch eine hohe Anhaftungswirkung oder auch ein Ankleben der Partikel an der Reinigungsvorrichtung und ist daher nicht auf magnetische Partikel beschränkt. Die Reinigungsvorrichtung mit Haftkraft kann beispielhaft Haftstrukturen nach dem Prinzip einer Klette oder eines Geckos aufweisen oder aber auch einfach eine gewisse Klebrigkeit vermitteln und findet daher vielfältig Anwendung zur Reinigung von Dauermagneten der Förderelemente von Schmutzpartikeln wie Staub, Ruß und dergleichen aber auch zur Beseitigung von größeren Partikeln, wie sie in der Produktfertigung anfallen können.

Vorteilhaft umfasst die eine Haftkraft aufweisende Reinigungsvorrichtung eine erste rotierbare Rolle mit einer eine Haftkraft aufweisenden Oberfläche. Die erste Rolle weist somit haftvermittelnde Oberflächenbereiche auf, an denen die Partikel anhaften. Je nach zu entfernenden Partikeln kann die Haftkraft der eine Haftkraft aufweisenden Oberfläche entsprechend eingestellt werden.

Um eine dauerhaft gute Reinigungsleistung zu erzielen, umfasst die Fördervorrichtung vorteilhaft eine Auftragsvorrichtung zum Auftragen einer eine Haftkraft aufweisenden Oberflächenschicht auf die erste Rolle. Die Oberflächenschicht kann die gesamte Oberfläche der ersten Rolle bedecken, kann aber auch nur partiell vorgesehen sein.

Alternativ zu einer Rolle mit einer eine Haftkraft aufweisenden Oberfläche bzw. mit einer eine Haftkraft aufweisenden Oberflächenschicht, kann die Reinigungsvorrichtung vorteilhaft auch eine erste rotierbare Rolle umfassen, die auf mindestens einem Oberflächenabschnitt eine eine Haftkraft aufweisende Folie aufweist. Die Folie mit Haftkraft ist kein fester Bestandteil der ersten Rolle, sondern ist lediglich auf der Oberfläche der ersten Rolle angeordnet. Durch ihre haftvermittelnden Eigenschaften können Partikel an der Folie anhaften. Bei Bedarf kann die Folie leicht, ohne hohen technischen Aufwand von der ersten Rolle entfernt und eine neue Folie auf der Rolle angeordnet werden.

Ebenfalls vorteilhaft kann die Reinigungsvorrichtung einer erste rotierbare Rolle und eine zweite rotierbare Rolle und ein die erste Rolle und die zweite Rolle umschließendes, umlaufendes, eine Haftkraft aufweisendes Band umfassen. Eine Steuerung der Rotation der ersten Rolle kann somit sehr einfach ausgeführt und damit eine Reinigungsleistung gezielt gesteuert werden.

Durch eine vertikale Anordnung der ersten Rolle und der zweiten Rolle, d.h. der Anordnung der ersten Rolle über der zweiten Rolle, ist ein Entfernen der Partikel aus dem Transportbereich der Fördervorrichtung besonders schnell und unkompliziert möglich.

Vorteilhaft umfasst die Fördervorrichtung eine Steuereinheit, die eingerichtet ist, die Reinigungsvorrichtung ein und aus zu schalten. Die Steuereinheit kann je nach zur Verfügung stehendem Platz an der Fördervorrichtung, an der Reinigungsvorrichtung oder aber im Umkreis der Fördervorrichtung vorgesehen sein.

Weiter vorteilhaft ist eine Steuereinheit vorgesehen, die eingerichtet ist, die erste Rolle mit einer Geschwindigkeit anzutreiben, welche einer Geschwindigkeit des an der Rolle vorbeigeführten Dauermagneten entspricht. Hierdurch kann die Reinigungsleistung effizient gesteigert werden.

Sofern die durch die Reinigungsvorrichtung von der Oberfläche des Dauermagneten entfernten Partikel nicht selbst, bedingt durch ihre Schwerkraft, von der Reinigungsvorrichtung abfallen, ist vorteilhaft eine Abscheidevorrichtung vorgesehen. Durch die Abscheidevorrichtung können die Partikel von der Reinigungsvorrichtung abgeschieden werden. Je nach Ausgestaltung der Reinigungsvorrichtung kann auch die Abscheidevorrichtung unterschiedlich gebildet sein und beispielhaft eine Abschabvorrichtung, eine Bürste, ein Gebläse, eine Abziehvorrichtung z.B. für das Entfernen einer adhäsiven Folie und dergleichen, umfassen.

Um die Entsorgung der von dem Dauermagneten beseitigten Partikel zu erleichtern und ggf. sogar die Partikel einem Recycling zuzuführen, umfasst die Fördervorrichtung vorteilhafterweise eine Aufnahmeeinrichtung zur Aufnahme der vom Dauermagneten entfernten Partikel.

Die Fördervorrichtung ist als Planarantriebfördervorrichtung ausgebildet. Derartige Planarantriebfördervorrichtungen werden beispielhaft in WO 2013/059934 A1 beschrieben und weisen neben einem Förderelement, das einen Dauermagnet umfasst, eine elektromagnetische Transportfläche zur planaren Bewegung des Förderelements auf. Erfindungsgemäß hat die Transportfläche mindestens einen Spalt, in dem die Reinigungsvorrichtung angeordnet ist. Somit erfolgen eine Anziehung und ein Abtransport von Partikeln von der Oberfläche des zu reinigenden Dauermagneten ausschließlich im Spalt. Das bzw. die Förderelemente werden damit über den Spalt bewegt, wobei hier lokal eine Ablösung bzw. eine Absaugung der Partikel durch die Reinigungsvorrichtung erfolgt.

Ebenfalls erfindungsgemäß wird auch ein Verfahren zum Reinigen von Dauermagneten einer elektromagnetbetriebenen Fördervorrichtung nach Anspruch 16 beschrieben.

Das Reinigen des Dauermagneten wird durch die Schritte des Vorbeiführens des Dauermagneten an der Reinigungsvorrichtung und eine Aufnahme der Partikel durch die Reinigungsvorrichtung ausgeführt. Das Verfahren ist einfach ohne hohen technischen Aufwand umsetzbar und ermöglicht ein Reinigen der Dauermagneten während des Förderbetriebs der Fördervorrichtung, so dass die Kontinuität des Förderprozesses gewährleistet wird und prozessbedingte Standzeiten vermieden werden.

Vorteilhaft umfasst das erfindungsgemäße Verfahren den Schritt des Entfernens der Partikel von der Reinigungsvorrichtung zur Regenerierung der Reinigungswirkung.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: eine schematische Darstellung eines Ausschnitts einer Fördervorrichtung,
- Figur 2: eine Seitenansicht einer Reinigungsvorrichtung,
- Figur 3: eine Seitenansicht einer Reinigungsvorrichtung ,
- Figur 4: eine Seitenansicht einer Reinigungsvorrichtung ,
- Figur 5: eine schematische Darstellung eines Ausschnitts einer Fördervorrichtung gemäß der Erfindung und
- Figur 6: eine weitere schematische Darstellung der Fördervorrichtung gemäß der Erfindung.

### Ausführungsformen der Erfindung

Die Erfindung wird mit Bezugnahme auf die nachfolgenden Zeichnungen im Detail erläutert. Hierbei beziffern gleiche Bezugszeichen gleiche Bauteile.

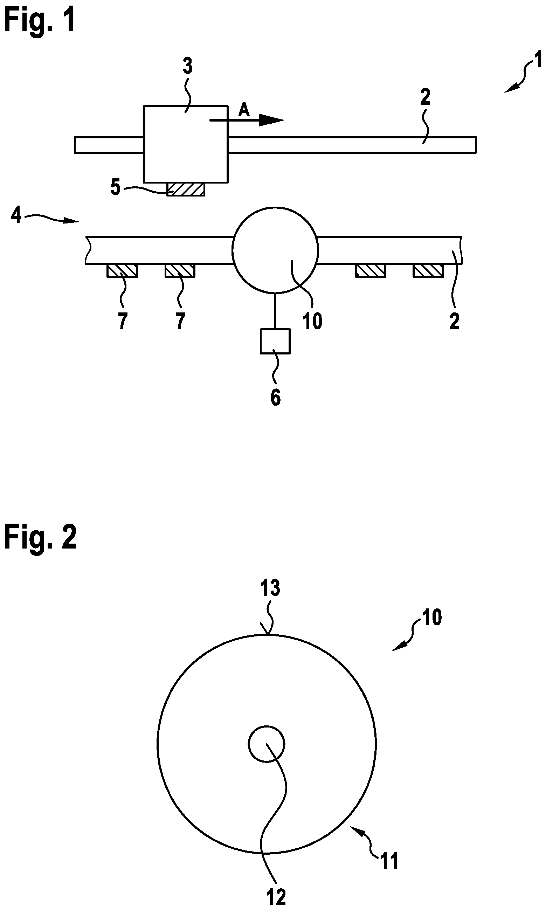

Figur 1 zeigt schematisch eine Seitenansicht eines Ausschnitts einer Fördervorrichtung 1, welche nicht Teil der Erfindung ist. Die Fördervorrichtung 1 umfasst einen Linearantrieb 4 mit Führungsschienen 2 und Fördermagneten 7, wobei die Fördermagnete 7 mit Dauermagneten 5, die an Förderelementen 3 (Mover) angeordnet sind, zusammenwirken. Die Fördervorrichtung 1 kann mehrere Förderelemente 3 umfassen.

Das in Figur 1 gezeigte Förderelement 3 weist an seiner Unterseite einen Dauermagnet 5 auf, kann aber auch mehrere Dauermagneten aufweisen. Bei Betrieb des Linearantriebs 4 wird durch magnetische Anziehungskräfte bzw. magnetische Abstoßungskräfte der Dauermagnet 5 des Förderelements 3 und damit auch das Förderelement 3 selbst, in Richtung des Pfeils A bewegt. Ladung, die z.B. auf dem Förderelement 3 gelagert ist, kann so entlang der Förderrichtung der Fördervorrichtung 1 von einem Ort zum anderen transportiert werden.

Die Fördervorrichtung 1 weist ferner eine Reinigungsvorrichtung 10 auf, die ortsfest an einem Streckenabschnitt des Linearantriebs 4 angeordnet ist. Die Reinigungsvorrichtung 10 ist dabei so vorgesehen, dass sie befähigt ist, die an der Unterseite der Förderelemente 3 befestigten Dauermagneten 5 während des Vorbeiführens der Dauermagnete 5 an der Reinigungsvorrichtung 10 zu reinigen, also daran anhaftende Partikel zu entfernen.

Die Reinigungsvorrichtung 10 kann als magnetische Reinigungsvorrichtung oder als eine eine Haftkraft aufweisende Reinigungsvorrichtung ausgebildet sein. Diese haben denselben Effekt, nämlich bewirken Sie eine Beseitigung von an dem Dauermagnet 5 anhaftenden Partikeln, unterscheiden sich aber in der Funktion. Eine magnetische Reinigungsvorrichtung zieht die Partikel durch magnetische Wechselwirkung von der Oberfläche der Dauermagneten 5 ab, ohne mechanische Arbeit zu verrichten. Eine eine Haftkraft aufweisende Reinigungsvorrichtung wechselwirkt mit den Partikeln in der Art, dass die Partikel durch Klebung oder Anhaftung, wie sie beispielsweise durch Hafthaare erzeugt wird, an die Reinigungsvorrichtung 10 gebunden werden.

Die Fördervorrichtung 1 weist ferner eine Steuereinheit 6 auf, die eingerichtet ist, die Reinigungsvorrichtung 10 ein und aus zu schalten. Die Steuereinheit 6 kann auch an der Reinigungsvorrichtung 10 angeordnet sein.

Durch die Integration der Reinigungsvorrichtung 10 in die Fördervorrichtung 1 kann während des Betriebs der Fördervorrichtung 1 eine stete Reinigung der Dauermagnete 5 der Förderelemente 3 vorgenommen werden, ohne dass Standzeiten vorgesehen werden müssen. Es wird eine über die Zeit gleichbleibend gute Förderleistung erzielt.

Figur 2 zeigt einen Ausschnitt einer ersten Ausgestaltung einer Reinigungsvorrichtung 10. Im Detail ist eine erste Rolle 11 gezeigt, die beispielsweise aus einem magnetischen Material oder einem eine Haftkraft aufweisenden Material gebildet ist. Die erste Rolle 11 ist mittels eines Lagers 12 rotierbar gelagert. Beim Vorbeiführen des bzw. der Dauermagneten an der ersten Rolle 11 werden Partikel auf eine Oberfläche 13 der ersten Rolle 11 übertragen und haften dort entweder durch magnetische Anziehungskräfte oder durch die Haftkraft vermittelte Kräfte an. Im Falle einer magnetischen ersten Rolle 11 ist diese mit einer Magnetfeldstärke magnetisierbar, die stärker ist als eine Magnetfeldstärke der Dauermagneten des Förderelements.

Die erste Rolle 11 kann rotieren, so dass nach Aufnahme der Partikel eine partikelfreie Oberfläche 13 der ersten Rolle 1 dem Dauermagneten zugewandt werden kann und die Reinigungsleistung immer gleichbleibend gut ist.

Mittels der Steuereinheit 6, wie sie beispielhaft in Figur 1 dargestellt ist, ist die erste Rolle 11 mit einer Geschwindigkeit antreibbar, welche einer Geschwindigkeit des an der ersten Rolle 11 vorbeigeführten Dauermagneten 5 entspricht.

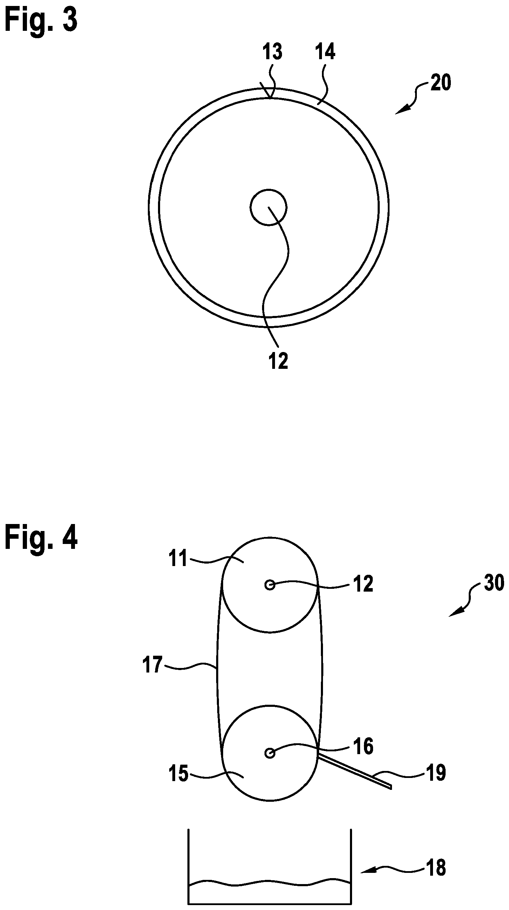

Der in Figur 3 gezeigte Ausschnitt einer Reinigungsvorrichtung 20 unterscheidet sich von der Reinigungsvorrichtung 10 aus Figur 2 dadurch, dass die erste Rolle an ihrer Oberfläche eine eine Haftkraft aufweisende Folie 14 aufweist. Die eine Haftkraft aufweisende Folie 14 ist auf mindestens einem Abschnitt der Oberfläche 13 der ersten rotierbaren Rolle 11 angeordnet und bedeckt, wie hier gezeigt, vorteilhaft die gesamte Oberfläche 13 der ersten Rolle 11. Durch die Haftkraft vermittelnden Eigenschaften der Folie 14 können bei Vorbeiführen von Dauermagneten 5 anhaftende Partikel von der Oberfläche der Dauermagneten 5 auf die Folie 14 übertragen werden. Ist die Folie 14 mit Partikeln bedeckt, kann sie von der Rolle 11 entfernt werden. Zur Erneuerung der Reinigungsleistung, kann sodann eine neue Folie auf die Oberfläche 13 der ersten Rolle 11 aufgebracht werden.

Figur 4 ist eine Seitenansicht eines Ausschnitts einer dritten Reinigungsvorrichtung 30. Hier ist zusätzlich zu einer ersten Rolle 11 eine zweite Rolle 15 vorgesehen, die ebenfalls durch ein Lager 16 rotierbar gelagert ist. Die erste Rolle 1 und die zweite Rolle 15 sind durch ein umlaufendes, die Rollen 11, 15 umschließendes Band 17 umgeben. Die erste Rolle 11 und die zweite Rolle 15 sind vertikal zueinander angeordnet, wobei die erste Rolle 11 den Dauermagneten 5 der Förderelemente 3 zugewandt ist.

Wie in den vorstehend geschilderten Ausführungsformen, gibt es auch hier verschiedene Funktionsweisen der Reinigungsvorrichtung 30.

Zum einen kann die erste Rolle 11, wie im Hinblick auf Figur 2 geschildert magnetisierbar sein. Die magnetischen Anziehungskräfte wirken durch das Band 17 auf die an der Reinigungsvorrichtung 30, und hier an der ersten Rolle 11, vorbeigeführten mit Partikeln behafteten Dauermagneten. Die Partikel werden durch die höhere Magnetfeldstärke der ersten Rolle 11 im Vergleich zu der Magnetfeldstärke der Dauermagneten der Förderelemente stärker von der ersten Rolle 11 angezogen und kommen auf dem Band 17 zu liegen. Durch Rotation der ersten Rolle 11 werden auch das Band 17 und die zweite Rolle 15 rotiert. Der mit Partikeln behaftete Abschnitt des Bandes wird in Richtung der zweiten Rolle 15 bewegt. Sobald die magnetischen Anziehungskräfte der ersten Rolle 11 nicht mehr ausreichend auf die Partikel einwirken, fallen diese vom Band 17 ab.

Vorzugsweise werden die Partikel von einer Aufnahmevorrichtung 18 aufgefangen. Zur Unterstützung des Ablösens der Partikel vom Band 17 kann eine Abscheidevorrichtung 19 vorgesehen sein.

In einer weiteren Ausführungsform ist das Band 17 ein eine Haftkraft aufweisendes, beispielsweise ein adhäsives, Band. Auch hier werden die am Band 17 vorbeigeführten Dauermagneten von Partikeln befreit, indem nämlich die Partikel durch adhäsive Wechselwirkung mit dem Band 17 übertragen werden. Die Partikel fallen dann entweder gemäß den Gesetzen der Schwerkraft folgend durch ihr Eigengewicht ab oder können durch die Abscheidevorrichtung 19, z.B. einem Messer oder dergleichen, vom Band 17 entfernt werden, so dass die Reinigungswirkung der Reinigungsvorrichtung 30 stets gleichbleibend gut ist.

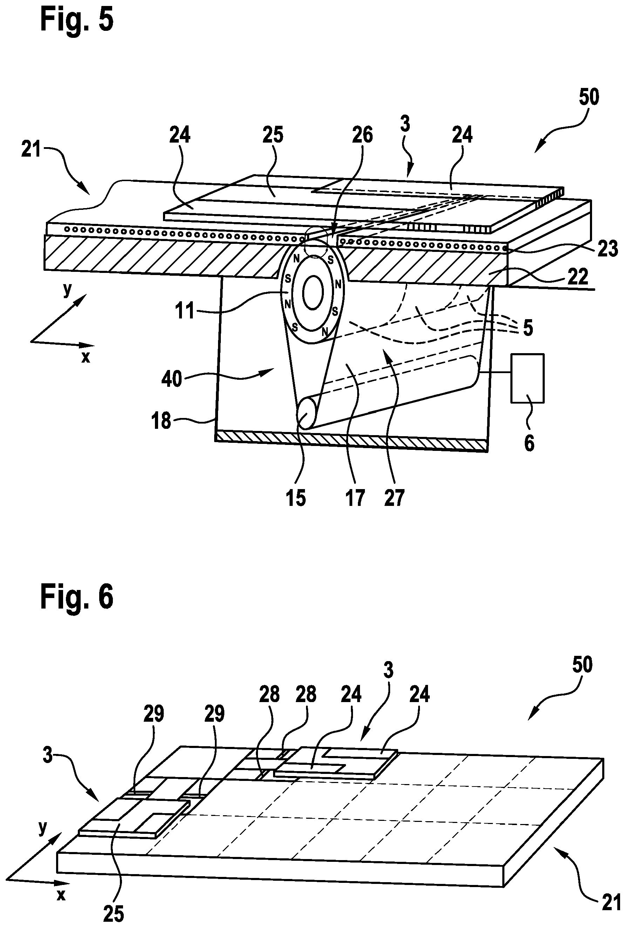

Figur 5 ist eine schematische Darstellung eines Ausschnitts einer Fördervorrichtung gemäß der Erfindung. Im Detail zeigt Figur 5 eine Planarantriebfördervorrichtung 50, die eine elektromagnetische Transportfläche 21 zur planaren Bewegung eines Förderelements 3 umfasst. Die elektromagnetische Transportfläche 21 weist einen Stator 22 und eine Sensorschicht inklusive Windungsschicht, aktiver Bremsschicht und Leistungselektronik, auf. Auf der Transportfläche 21 ist beispielhaft ein Förderelement 3 mit zwei Dauermagneten 24, eine sogenannte Halbach-Magnet-Anordnung, zur Bewegung des Förderelements 3 in X-Richtung angeordnet. Ferner ist auch einer von zwei Dauermagneten 25, ebenfalls eine Halbach-Magnet-Anordnung, zur Bewegung des Förderelements 3 in Y-Richtung, gezeigt. In der Transportfläche 21 ist ein Spalt 26 vorgesehen, in dem eine Reinigungsvorrichtung 40 angeordnet ist.

Die Reinigungsvorrichtung 40 umfasst eine erste Rolle 11 und eine zweite Rolle 15, die durch ein Band 17 miteinander verbunden sind. Die zweite Rolle 15 dient als Antriebsrolle für das Band 17 und wird durch die Steuereinheit 6 gesteuert. Die erste Rolle 11 ist magnetisierbar, vorzugsweise über 2/3 ihrer Länge, nämlich jeweils zu 1/3 der Länge der Rolle 1 an jedem Ende. Durch Rotation der zweiten Rolle 15 wird über das Band 17 eine Rotation der ersten Rolle 11 erzeugt. Durch das spezifische Muster des Magnetfeldes im Arbeitsspalt zwischen der Unterseite des Förderelements 3 und der Transportfläche 21 sammeln sich beispielsweise ferromagnetische Partikel an der Unterseite der Dauermagneten 24, 25 an. Durch die abwechselnde magnetische Polarisierung werden Partikel von dem über den Spalt 26 bewegten Förderelement 3 durch das stärkere Magnetfeld der ersten Rolle 11 umgelenkt, von den Dauermagneten 24, 25 abgelöst, abgezogen und auf das Band 17 gefördert. Die Partikel haften durch magnetische Anziehung der ersten Rolle 11 auf der Oberfläche des Bandes 17. Durch Weiterrotation der zweiten Rolle 15 und damit auch der ersten Rolle 11, gelangen die Partikel schließlich in einen Bereich 27 des Bandes 17 außerhalb des Einflussbereichs des Magnetfeldes der ersten Rolle 11 und fallen vom Band 17in die Aufnahmevorrichtung 18.

Durch die spezifisch ausgebildete Fördervorrichtung 50 dieser Ausführungsform erfolgen eine Anziehung, ein Ablösen und ein Abtransport von Partikeln von der Oberfläche der zu reinigenden Dauermagneten 24, 25 ausschließlich im Spalt 26. Die Dauermagnete 24, 25 des Förderelements 3 werden bei Bewegung über den Spalt 26 gereinigt.

Figur 6 ist eine weitere schematische Darstellung der elektromagnetischen Fördervorrichtung aus Figur 5. Hier ist die gesamte Transportfläche 21 gezeigt. Auf der Transportfläche 21 sind zwei Förderelemente 3 angeordnet. Die Transportfläche 21 weist in Summe vier Spalte 28, 29 auf. Spalte 28 sind solche, die eine Reinigung des bzw. der Dauermagneten 24 in X-Richtung ermöglichen, während Spalte 29 solche sind, die eine Reinigung des Dauermagneten 25 (bzw. der Dauermagneten 25) in Y-Richtung ermöglichen. In den Spalten 28, 29 sind jeweils Reinigungsvorrichtungen 40 angeordnet. Zwischen den paarweise angeordneten Spalten 28 und 29 sind Abschnitte der Transportfläche 21 vorhanden, so dass in diesen Bereichen keine Reinigung der Dauermagnete 24, 25 bewirkt wird.

## Patentansprüche

1. Elektromagnetbetriebene Fördervorrichtung umfassend:
- ein bewegbares Förderelement (3),
- mindestens einen am Förderelement (3) angeordneten Dauermagnet (5, 24, 25) zur Fortbewegung des Förderelements (3) und
- eine Reinigungsvorrichtung (10, 20, 30, 40) zum Entfernern von Partikeln von einer Oberfläche des Dauermagneten (5, 24, 25)
**dadurch gekennzeichnet, dass**
die Fördervorrichtung als Planarantriebfördervorrichtung ausgebildet ist, die eine elektromagnetische Transportfläche zur planaren Bewegung des Förderelements (3) umfasst, wobei die Transportfläche einen Spalt (26) aufweist, in dem die Reinigungsvorrichtung (40) angeordnet ist.

2. Fördervorrichtung nach Anspruch 1, **dadurch gekennzeichnet, dass** die Reinigungsvorrichtung (10, 20, 30, 40) ortsfest ist und der Dauermagnet (5, 24, 25) während der Fortbewegung des Förderelements (3) an der Reinigungsvorrichtung (10, 20, 30, 40) vorbeiführbar ist.

3. Fördervorrichtung nach Anspruch 1 oder 2, **dadurch gekennzeichnet, dass** die Reinigungsvorrichtung (10, 20, 30, 40) eine magnetische Reinigungsvorrichtung ist.

4. Fördervorrichtung nach Anspruch 3, **dadurch gekennzeichnet, dass** die Reinigungsvorrichtung (10, 20, 30, 40) ein bewegliches, magnetisches Element zum Ablösen der Partikel umfasst.

5. Fördervorrichtung nach Anspruch 3 oder 4, **dadurch gekennzeichnet, dass** die Reinigungsvorrichtung (10, 20, 30, 40) eine erste rotierbare Rolle (11) umfasst, wobei die erste rotierbare Rolle (11) mit einer Magnetfeldstärke magnetisierbar ist, die stärker ist als eine Magnetfeldstärke der Dauermagneten (5, 24, 25) des Förderelements (3).

6. Fördervorrichtung nach Anspruch 5, **dadurch gekennzeichnet, dass** die Reinigungsvorrichtung (10, 20, 30, 40) eine zweite rotierbare Rolle (15) und ein die erste Rolle (11) und die zweite Rolle (15) umschließendes, umlaufendes Band (17) umfasst.

7. Fördervorrichtung nach Anspruch 1 oder 2, **dadurch gekennzeichnet, dass** die Reinigungsvorrichtung (10, 20, 30, 40) eine eine Haftkraft aufweisende Reinigungsvorrichtung ist.

8. Fördervorrichtung nach Anspruch 7, **dadurch gekennzeichnet, dass** die Reinigungsvorrichtung (10, 20, 30, 40) eine erste rotierbare Rolle (11) umfasst, wobei die erste rotierbare Rolle (11) eine eine Haftkraft aufweisende Oberfläche aufweist.

9. Fördervorrichtung nach Anspruch 8, **gekennzeichnet durch** eine Auftragsvorrichtung zum Auftragen einer eine Haftkraft aufweisenden Oberflächenschicht auf die erste Rolle (11).

10. Fördervorrichtung nach Anspruch 7, **dadurch gekennzeichnet, dass** die Reinigungsvorrichtung (20) eine eine Haftkraft aufweisende Folie (14) aufweist, die auf mindestens einem Abschnitt einer Oberfläche (13) einer ersten rotierbaren Rolle (11) angeordnet ist.

11. Fördervorrichtung nach Anspruch 7, **dadurch gekennzeichnet, dass** die Reinigungsvorrichtung (10, 20, 30, 40) einer erste rotierbare Rolle (11) und eine zweite rotierbare Rolle (15) und ein die erste Rolle (11) und die zweite Rolle (15) umschließendes, umlaufendes, eine Haftkraft aufweisendes Band umfasst.

12. Fördervorrichtung nach einem der Ansprüche 6 oder 11, **gekennzeichnet durch** eine vertikale Anordnung der ersten Rolle (11) und der zweiten Rolle (15).

13. Fördervorrichtung nach einem der Ansprüche 5, 6 und 8 bis 12,
**gekennzeichnet durch** eine Steuereinheit (6), welche eingerichtet ist, die erste Rolle (11) mit einer Geschwindigkeit anzutreiben, welche einer Geschwindigkeit des an der ersten Rolle (11) vorbeigeführten Dauermagneten (5, 24, 25) entspricht.

14. Fördervorrichtung nach einem der vorhergehenden Ansprüche,
**gekennzeichnet durch** eine Abscheidevorrichtung (19) zum Abscheiden der durch die Reinigungsvorrichtung (10, 20, 30, 40) von dem Dauermagnet (5, 24, 25) entfernten Partikel.

15. Fördervorrichtung nach einem der vorhergehenden Ansprüche,
**gekennzeichnet durch** eine Aufnahmeeinrichtung (18) zur Aufnahme der von dem Dauermagnet (5, 24, 25) entfernten Partikel.

16. Verfahren zum Reinigen von Dauermagneten einer
elektromagnetbetriebenen Fördervorrichtung (1) mit einem bewegbaren Förderelement (3), mindestens einem am Förderelement (3) angeordneten Dauermagnet (5, 24, 25) zur Fortbewegung des Förderelements (3) und
einer Reinigungsvorrichtung (10, 20, 30, 40) zum Entfernern von Partikeln von einer Oberfläche der Dauermagneten (5, 24, 25), umfassend die Schritte des Vorbeiführens der Dauermagnete (5, 24, 25) an der Reinigungsvorrichtung (10, 20, 30, 40) und Aufnahme der Partikel durch die Reinigungsvorrichtung (10, 20, 30, 40) **dadurch gekennzeichnet, dass** die Fördervorrichtung als Planarantriebfördervorrichtung ausgebildet ist, die eine elektromagnetische Transportfläche zur planaren Bewegung des Förderelements (3) umfasst, wobei die Transportfläche einen Spalt (26) aufweist, in dem die Reinigungsvorrichtung (40) angeordnet ist.

17. Verfahren nach Anspruch 16, ferner um fassend den Schritt des Entfernens der Partikel von der Reinigungsvorrichtung (10, 20, 30, 40).

## Claims

1. Electromagnet-operated conveying device comprising:
- a movable conveying element (3),
- at least one permanent magnet (5, 24, 25) arranged on the conveying element (3) for the onward movement of the conveying element (3), and
- a cleaning device (10, 20, 30, 40) for removing particles from a surface of the permanent magnet (5, 24, 25),
**characterized in that**
the conveying device is constructed as a planar drive conveying device, which comprises an electromagnetic transport surface for the planar movement of the conveying element (3), wherein the transport surface has a gap (26), in which the cleaning device (40) is arranged.

2. Conveying device according to Claim 1, **characterized in that** the cleaning device (10, 20, 30, 40) is fixed in its location and the permanent magnet (5, 24, 25) can be led past the cleaning device (10, 20, 30, 40) during the onward movement of the conveying element (3).

3. Conveying device according to Claim 1 or 2, **characterized in that** the cleaning device (10, 20, 30, 40) is a magnetic cleaning device.

4. Conveying device according to Claim 3, **characterized in that** the cleaning device (10, 20, 30, 40) comprises a movable magnetic element for detaching the particles.

5. Conveying device according to Claim 3 or 4, **characterized in that** the cleaning device (10, 20,
30, 40) comprises a first rotatable roller (11), wherein the first rotatable roller (11) is magnetizable with a magnetic field strength which is higher than a magnetic field strength of the permanent magnets (5, 24, 25) of the conveying element (3).

6. Conveying device according to Claim 5, **characterized in that** the cleaning device (10, 20, 30, 40) comprises a second rotatable roller (15) and a circulating belt (17) enclosing the first roller (11) and the second roller (15).

7. Conveying device according to Claim 1 or 2, **characterized in that** the cleaning device (10, 20, 30, 40) is a cleaning device having an adhesive force.

8. Conveying device according to Claim 7, **characterized in that** the cleaning device (10, 20,
30, 40) comprises a first rotatable roller (11), wherein the first rotatable roller (11) has a surface having an adhesive force.

9. Conveying device according to Claim 8, **characterized by** an application device for applying a surface layer having an adhesive force to the first roller (11).

10. Conveying device according to Claim 7, **characterized in that** the cleaning device (20) has a film (14) having an adhesive force, which is arranged on at least one section of a surface (13) of a first rotatable roller (11).

11. Conveying device according to Claim 7, **characterized in that** the cleaning device (10, 20, 30, 40) comprises a first rotatable roller (11) and a second rotatable roller (15) and a circulating belt enclosing the first roller (11) and the second roller (15) and having an adhesive force.

12. Conveying device according to either of Claims 6 and 11, **characterized by** a vertical arrangement of the first roller (11) and the second roller (15).

13. Conveying device according to one of Claims 5, 6 and 8 to 12, **characterized by** a control unit (6) which is set up to drive the first roller (11) at a speed which corresponds to a speed of the permanent magnet (5, 24, 25) led past the first roller (11).

14. Conveying device according to one of the preceding claims, **characterized by** a separating device (19) for separating the particles removed from the permanent magnet (5, 24, 25) by the cleaning device (10, 20, 30, 40).

15. Conveying device according to one of the preceding claims, **characterized by** a receiving apparatus (18) for receiving the particles removed from the permanent magnet (5, 24, 25).

16. Method for cleaning permanent magnets of an electromagnet-operated conveying device (1) having a movable conveying element (3), at least one permanent magnet (5, 24, 25) arranged on the conveying element (3) for the onward movement of the conveying element (3), and a cleaning device (10, 20, 30, 40) for removing particles from a surface of the permanent magnet (5, 24, 25), comprising
the steps of leading the permanent magnets (5, 24, 25) past the cleaning device (10, 20, 30, 40) and picking up the particles by means of the cleaning device (10, 20, 30, 40), **characterized in that** the conveying device is constructed as a planar drive conveying device, which comprises an electromagnetic transport surface for the planar movement of the conveying element (3), wherein the transport surface has a gap (26), in which the cleaning device (40) is arranged.

17. Method according to Claim 16, further comprising the step of removing the particles from the cleaning device (10, 20, 30, 40).

## Revendications

1. Dispositif de transport actionné par électroaimants, comprenant :
- un élément de transport mobile (3),
- au moins un aimant permanent (5, 24, 25), disposé sur l'élément de transport (3), pour déplacer l'élément de transport (3), et
- un dispositif de nettoyage (10, 20, 30, 40) pour éliminer des particules d'une surface de l'aimant permanent (5, 24, 25),
**caractérisé en ce que** le dispositif de transport est réalisé sous la forme d'un dispositif de transport à entraînement planaire qui comprend une surface de transport électromagnétique destinée au déplacement planaire de l'élément de transport (3), la surface de transport présentant un espace (26) dans lequel est disposé le dispositif de nettoyage (40).

2. Dispositif de transport selon la revendication 1, **caractérisé en ce que** le dispositif de nettoyage (10, 20, 30, 40) est stationnaire et l'aimant permanent (5, 24, 25) peut être amené à passer devant le dispositif de nettoyage (10, 20, 30, 40) pendant le déplacement de l'élément de transport (3).

3. Dispositif de transport selon la revendication 1 ou 2, **caractérisé en ce que** le dispositif de nettoyage (10, 20, 30, 40) est un dispositif de nettoyage magnétique.

4. Dispositif de transport selon la revendication 3, **caractérisé en ce que** le dispositif de nettoyage (10, 20, 30, 40) comprend un élément magnétique mobile pour détacher les particules.

5. Dispositif de transport selon la revendication 3 ou 4, **caractérisé en ce que** le dispositif de nettoyage (10, 20, 30, 40) comprend une première poulie rotative (11), la première poulie rotative (11) pouvant être magnétisée par une intensité de champ magnétique supérieure à une intensité de champ magnétique des aimants permanents (5, 24, 25) de l'élément de transport (3).

6. Dispositif de transport selon la revendication 5, **caractérisé en ce que** le dispositif de nettoyage (10, 20, 30, 40) comprend une deuxième poulie rotative (15) et une bande tournante (17) entourant la première poulie (11) et la deuxième poulie (15).

7. Dispositif de transport selon la revendication 1 ou 2, **caractérisé en ce que** le dispositif de nettoyage (10, 20, 30, 40) est un dispositif de nettoyage ayant de la force adhésive.

8. Dispositif de transport selon la revendication 7, **caractérisé en ce que** le dispositif de nettoyage (10, 20, 30, 40) comprend une première poulie rotative (11), la première poulie rotative (11) présentant une surface ayant de la force adhésive.

9. Dispositif de transport selon la revendication 8, **caractérisé par** un dispositif d'application pour appliquer sur la première poulie (11) un revêtement de surface ayant de la force adhésive.

10. Dispositif de transport selon la revendication 7, **caractérisé en ce que** le dispositif de nettoyage (20) présente un film ayant de la force adhésive (14) qui est disposé sur au moins une partie d'une surface (13) d'une première poulie rotative (11).

11. Dispositif de transport selon la revendication 7, **caractérisé en ce que** le dispositif de nettoyage (10, 20, 30, 40) comprend une première poulie rotative (11) et une deuxième poulie rotative (15) et une bande tournante ayant de la force adhésive et entourant la première poulie (11) et la deuxième poulie (15).

12. Dispositif de transport selon l'une quelconque des revendications 6 et 11, **caractérisé par** une disposition verticale de la première poulie (11) et de la deuxième poulie (15).

13. Dispositif de transport selon l'une quelconque des revendications 5, 6 et 8 à 12, **caractérisé par** une unité de commande (6) qui est aménagée pour entraîner la première poulie (11) à une vitesse qui correspond à une vitesse de l'aimant permanent (5, 24, 25) amené à passer devant la première poulie (11).

14. Dispositif de transport selon l'une quelconque des revendications précédentes, **caractérisé par** un dispositif de dépôt (19) pour déposer les particules éliminées de l'aimant permanent (5, 24, 25) par le dispositif de nettoyage (10, 20, 30, 40).

15. Dispositif de transport selon l'une quelconque des revendications précédentes, **caractérisé par** un dispositif collecteur (18) pour collecter les particules éliminées de l'aimant permanent (5, 24, 25).

16. Procédé permettant de nettoyer des aimants permanents d'un dispositif de transport (1) actionné par des électroaimants, comprenant un élément de transport mobile (3), au moins un aimant permanent (5, 24, 25), disposé sur l'élément de transport (3), pour déplacer l'élément de transport (3), et un dispositif de nettoyage (10, 20, 30, 40) pour éliminer des particules d'une surface des aimants permanents (5, 24, 25), comprenant les étapes consistant à faire passer les aimants permanents (5, 24, 25) devant le dispositif de nettoyage (10, 20, 30, 40) et à collecter les particules par le dispositif de nettoyage (10, 20, 30, 40), **caractérisé en ce que** le dispositif de transport est réalisé sous la forme d'un dispositif de transport à entraînement planaire qui comprend une surface de transport électromagnétique destinée au déplacement planaire de l'élément de transport (3), la surface de transport présentant un espace (26) dans lequel est disposé le dispositif de nettoyage (40).

17. Procédé selon la revendication 16, comprenant en outre l'étape consistant à éliminer les particules du dispositif de nettoyage (10, 20, 30, 40).
